Europäisches Patentamt

European Patent Office

Office européen des brevets

(19)

(11) Numéro de publication : **0 311 523 B1**

(12) **FASCICULE DE BREVET EUROPEEN**

(45) Date de publication du fascicule du brevet :
**15.04.92 Bulletin 92/16**

(51) Int. Cl.$^5$ : **B60Q 1/14,** H01H 3/50,
H01H 13/60

(21) Numéro de dépôt : **88402529.7**

(22) Date de dépôt : **06.10.88**

(54) **Commutateurs bistables en particulier pour la commande de l'éclairage code/phare d'un véhicule automobile.**

(30) Priorité : **08.10.87 FR 8713915**

(43) Date de publication de la demande :
**12.04.89 Bulletin 89/15**

(45) Mention de la délivrance du brevet :
**15.04.92 Bulletin 92/16**

(84) Etats contractants désignés :
**DE ES GB IT**

(56) Documents cités :
**FR-A- 2 354 626**
**US-A- 4 300 026**

(73) Titulaire : **JAEGER**
**2, rue Baudin**
**F-92303 Levallois-Perret (FR)**

(72) Inventeur : **Chrétien, Louis**
**65, Rue du Grillon**
**F-95610 Eragny sur Oise (FR)**
Inventeur : **Clérin, Michel**
**29, Place des Erables**
**F-78260 Achères (FR)**

(74) Mandataire : **Martin, Jean-Jacques et al**
**Cabinet REGIMBEAU 26, Avenue Kléber**
**F-75116 Paris (FR)**

## Description

La présente invention concerne le domaine des commutateurs électriques bistables. Elle trouve notamment, mais non exclusivement, application dans la commande de l'éclairage code-phare des véhicules automobiles.

Plus précisément encore, la présente invention concerne des perfectionnements aux commutateurs bistables décrits dans les demandes de brevet français déposées le 18 avril 1986 sous le numéro 86 05604 correspondant à FR-A-2 597 659 publié le 23.10.1987, le 3 juin 1986 sous le numéro 86 07963 correspondant à FR-A-2 599 549 publié le 04.12.1987 et le 3 décembre 1986 sous le numéro 86 16925 correspondant à FR-A-2 607 960 publié le 10.06.1988.

Comme cela apparaît sur la figure 1 annexée qui est identique à la figure 2 de la demande de brevet français 86 05604, on a décrit dans cette dernière un commutateur bistable comprenant un boîtier 100 qui loge un coulisseau de commande 200 guidé à translation dans une direction A entre une position de repos et une position de travail, une palette 300 s'étendant la direction de déplacement du coulisseau, portée à pivotement sur le coulisseau de commande autour d'un axe 302 transversal à la direction de translation du coulisseau, un tiroir de contact 400 susceptible de déplacement dans une direction générale B perpendiculaire à la direction A de déplacement du coulisseau et à l'axe de pivotement 302 de la palette 300, muni d'au moins un plot de contact 450 et de deux rampes 460, 470 ménagées sur une face commune du tiroir, en regard de la palette 300 telle que lesdites rampes 460, 470 soient placées alternativement en regard de la palette 300 selon la position du tiroir dans le boîtier.

Plus précisément encore, le commutateur bistable décrit dans la demande de brevet français 86 05604 comprend un tiroir de contact 400 susceptible de déplacement entre deux positions et sollicité élastiquement vers une position de repos. De plus, le tiroir de contact 400 porte un téton 455 en saillie perpendiculairement à sa direction de translation B, pénétrant dans une lumière 144 ménagée dans le boîtier 100 ou un élément lié à celui-ci, qui comporte au moins un segment 150 de verrouillage parallèle à la direction de déplacement A du coulisseau.

En position de repos du tiroir de contact 400 le téton 455 placé dans la lumière 144 est éloigné du segment de verrouillage 150.

Un maintien du tiroir de contact 400 dans la seconde position, commandée par le coulisseau de commande 200 et la palette 300, peut être obtenu lorsque le téton 455 peut pénétrer dans le segment de verrouillage 150.

Ces dispositions ont été décrites en détail dans la demande de brevet français 86 05604, et ne seront donc pas décrites dans la présente demande.

La description et les figures de la demande de brevet français 86 05604 doivent être considérées comme intégrées à la présente description par la référence qui leur est faite ici.

On a de plus décrit dans la demande de brevet français 86 05604 la possibilité d'utiliser un élément de déverrouillage apte à recouvrir le segment de verrouillage 150 de la lumière 144.

Lorsque cet élément de déverrouillage recouvre en permanence le segment 150, la seconde position du tiroir de contact 400 est une position instable.

Par contre, lorsque l'élément de déverrouillage recouvre sélectivement le segment 150, on obtient une possibilité de réinitialisation sélective du tiroir de contact 400 en position de repos.

On a décrit dans la demande de premier certificat d'addition déposée le 3 juin 1986 sous le numéro 86 07963 un commutateur de type précité dans lequel le tiroir de contact est susceptible de déplacement entre deux positions, des moyens sollicitent élastiquement le tiroir vers une première position et il est prévu des moyens de verrouillage à commande électromagnétique pour maintenir sélectivement le tiroir dans la seconde position lorsqu'il est déplacé dans celle-ci par la palette associée au coulisseau. Ces moyens de verrouillage comprennent deux organes de verrouillage formés respectivement d'un téton porté par le tiroir et s'étendant perpendiculairement à la direction de déplacement du tiroir de contact et une lumière recevant le téton ménagée sur un chariot, et qui comporte au moins un segment de verrouillage parallèle à la direction de déplacement du coulisseau. Le chariot est déplaçable par le tiroir de contact entre une position de repos correspondant à la première position de tiroir et une position de verrouillage correspondant à la seconde position du tiroir, le chariot étant maintenu en position de verrouillage lorsqu'une bobine électrique associée est alimentée.

Cette disposition permet par exemple, lorsque le plot de contact porté par le tiroir de contact est utilisé pour assurer une commutation code/phare des feux d'un véhicule automobile, d'assurer une réinitialisation automatique en position code, du commutateur bistable, lorsqu'un commutateur auxiliaire contrôlant la commande électromagnétique des moyens de verrouillage est placé dans une position prédéterminée correspondant à une commande en position code.

On a également décrit dans la demande de troisième certificat d'addition déposée le 3 décembre 1986 sous le numéro 86 16925 un commutateur du type indiqué dans le préambule, selon lequel le tiroir de contact est susceptible de déplacement entre deux positions, des moyens sollicitent élastiquement le tiroir vers une première position et il est prévu des moyens de verrouillage à commande électromagnétique pour maintenir sélectivement le tiroir dans la seconde position lorsqu'il est déplacé dans celle-ci par la palette associée au coulisseau, les moyens de verrouillage comprenant une bobine électrique alimentée sélectivement par un commutateur auxiliaire associé, un chariot portant un premier organe de verrouillage coopérant avec un second organe de verrouillage prévu sur le tiroir de contact, déplaçable par le tiroir parallèlement au déplacement de celui-ci, entre une position de repos correspondant à la première position du tiroir et une position de verrouillage correspondant à la seconde position du tiroir, le chariot étant maintenu en position de verrouillage lorsque la bobine est alimentée, et une rampe contrôlant un déplacement relatif du tiroir de contact et du chariot perpendiculairement à la direction de déplacement du tiroir de contact, lorsque le tiroir est déplacé de la première position vers la seconde position pour porter en prise les organes de verrouillage prévus sur le tiroir de contact et le chariot.

La présente invention a maintenant pour but de perfectionner les commutateurs électriques bistables comprenant un tiroir de contact susceptible de déplacement entre deux positions, en proposant une nouvelle structure de verrouillage du tiroir qui autorise, à l'aide d'une commande à distance, une réinitialisation du tiroir de contact, en position de repos.

La présente invention a également pour but de proposer un nouveau commutateur bistable conçu pour autoriser un verrouillage sélectif du tiroir de contact en seconde position, c'est-à-dire autorisant à volonté de verrouiller ou de ne pas verrouiller le tiroir de contact dans la seconde position, lorsque celle-ci est atteinte.

Ces différents buts sont atteints dans le cadre de la présente invention grâce à un commutateur électrique bistable comprenant un boîtier qui loge un tiroir de contact susceptible de déplacement entre deux positions, des moyens élastiques qui sollicitent le tiroir vers une première position, deux organes de verrouillage prévus respectivement sur le tiroir de contact et sur le boîtier, qui sont susceptibles de venir en prise pour verrouiller le tiroir de contact en second position, un chariot déplaçable par le tiroir parallèlement au déplacement de celui-ci, entre une position de travail, dans laquelle le chariot interfère avec les organes de verrouillage afin d'empêcher qu'ceux-ci ne viennent en prise et donc empêcher que le tiroir de contact ne puisse être verrouillé en seconde position, et une position inactive dans laquelle le chariot n'interfère pas avec les organes de verrouillage pour autoriser la venue en prise de ceux-ci, et une bobine électrique alimentée sélectivement par un commutateur associé pour immobiliser sélectivement le chariot dans l'une des deux positions précitées lorsqu'elle est alimentée.

La présente invention apparaîtra à la lecture de la description détaillée qui va suivre et en regard des dessins annexés, donnés à titre d'exemple non limitatif et sur lesquels :

    – la figure 1 précédemment évoquée est identique à la figure 2 de la demande de brevet français 86 05604 et correspond à une vue en coupe d'un commutateur selon un plan de coupe parallèle à la direction de déplacement du tiroir de contact,

    – la figure 2 représente une autre vue latérale du tiroir de contact utilisé dans le commutateur conforme à l'invention,

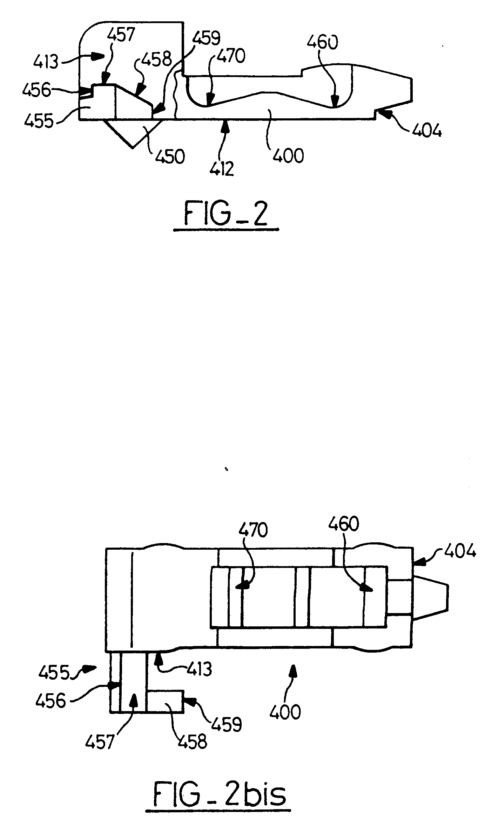

    – la figure 2bis représente une vue de dessus du même tiroir,

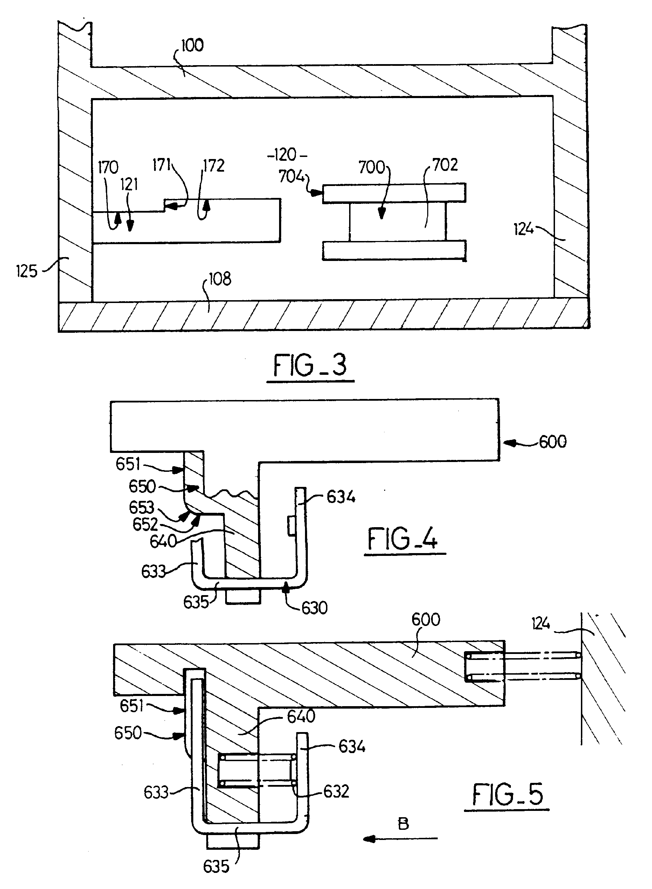

    – la figure 3 représente une vue correspondante du boîtier recevant le chariot,

    – la figure 4 représente une vue latérale schématique et partiellement en coupe du même chariot,

    – la figure 5 représente une autre vue en coupe longitudinale du chariot, et

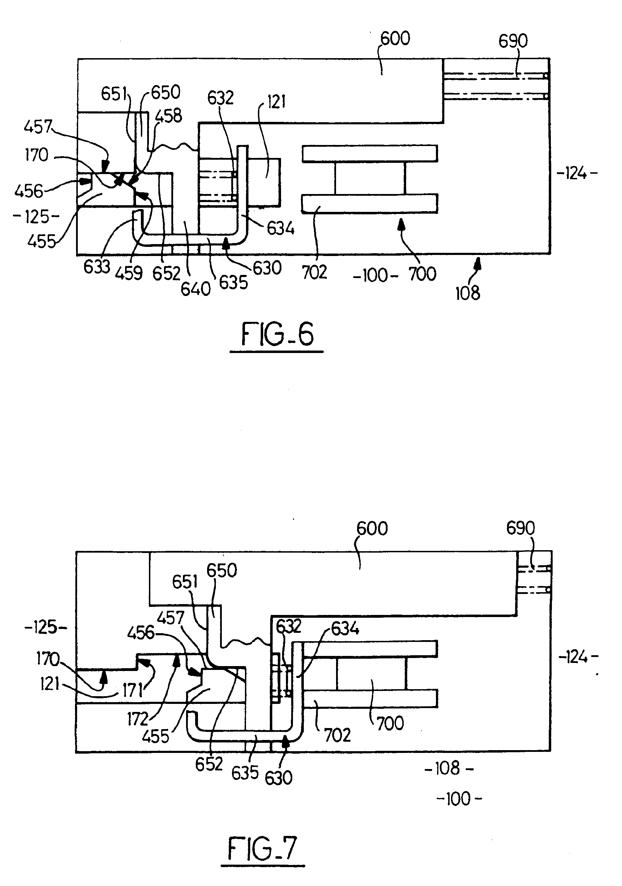

    – les figures 6, 7, 8 et 9 représentent schématiquement différentes étapes de fonctionnement du commutateur conforme à la présente invention.

Sur les figures annexées, le tiroir de contact est référencé 400, tandis que le chariot est référencé 600.

Le tiroir de contact 400 est déplacé à translation dans le boîtier 100, dans la direction référencée B, par le coulisseau de commande 200 et la palette 300 associés.

La direction B de déplacement du tiroir de contact 400 est parallèle au plan des figures 6, 7, 8 et 9.

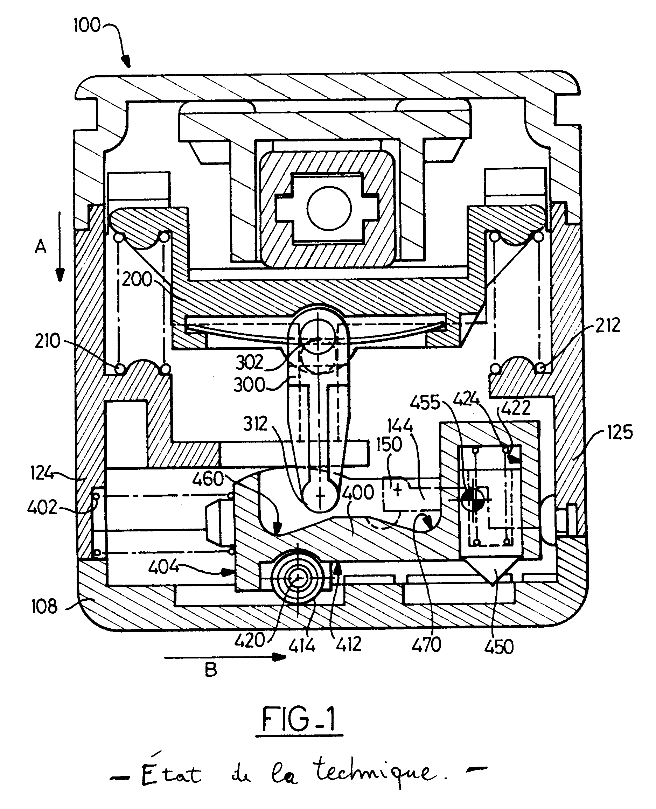

Le tiroir de contact 400 est sollicité vers une position de repos illustrée sur les figures 1 et 6 (soit vers la droite de la figure 1 et la gauche des figures 6, 7, 8 et 9) par un ressort 402.

Ce ressort 402 est intercalé entre la paroi latérale 124 du boîtier et une paroi latérale 404 du tiroir 400 qui lui fait vis-à-vis.

En position de repos le tiroir de contact 400 prend appui contre une paroi latérale 125 du boîtier. La paroi latérale 125 est parallèle et opposée à la paroi latérale 124 précitée.

De préférence un galet 414 est intercalé entre le tiroir de contact 400 et le fond 108 du boîtier. Ce fond 108 est perpendiculaire aux parois latérales 124, 125 et parallèle à la direction de translation B.

Le galet 414 selon l'illustration de la figure 1 est porté par le tiroir de contact 400. En variante, le galet 414 peut être porté par le fond 108 du boîtier. L'axe 420 du galet 414 est parallèle à l'axe de pivotement 302 de la palette 300.

Le tiroir de contact 400 est de plus muni d'un plot de contact 450. Le plot de contact 450 est logé dans un alésage borgne 422 ménagé dans le tiroir 400 et débouchant sur la face 412 du tiroir 400, qui est dirigée vers le fond 108 du boîtier précité.

Le plot de contact 450 est sollicité vers l'extérieur de l'alésage 422 par un ressort hélicoïdal 424.

Le plot de contact 450 repose par son extrémité libre extérieure à l'alésage 422 contre des lamelles de contact supportées par le fond 108. Ainsi, le plot de contact 450 est adapté pour court-circuiter des paires respectives de lamelles pour fermer les circuits d'alimentation alternativement des moyens d'éclairage code dans une première position, et des moyens d'éclairage phare du véhicule automobile, dans une seconde position.

Le boîtier 100 comprend un voile 120 s'étendant parallèlement à la direction de translation A du coulisseau de commande 200 et à la direction de translation B du tiroir de contact 400. Le tiroir de contact 400 et le chariot 600 sont placés respectivement de part et d'autre du voile 120. Le voile 120 est muni d'une ouverture 121 dont la géométrie sera décrite plus en détail par la suite. Cette ouverture 121 forme un premier organe de verrouillage.

Sur sa face 413 adjacente au voile 120 le tiroir de contact 400 est muni d'un second organe de verrouillage 455. Ce dernier fait saillie sur la face 413 précitée et est engagé dans l'ouverture 121.

Comme illustré sur la figure 2, l'organe de verrouillage 455 est prévu sur le tiroir de contact 400 au voisinage du plot 450. De ce fait, l'organe de verrouillage 455 est sollicité en appui contre la face de l'ouverture 121 qui est dirigée vers le fond 108 du boîtier, par le ressort 424 associé au plot 450.

La face précitée de l'ouverture 121, contre laquelle repose l'organe de verrouillage 455, est formée de deux segments 170, 172 rectilignes parallèles au fond 108 et reliés entre eux par un décrochement 171 qui s'étend transversalement au fond 108. Le décrochement 171 est parallèle aux parois latérales 124, 125 et dirigé vers la paroi latérale 124.

En position de repos du tiroir de contact 400, l'organe de verrouillage 455 est placé en regard du segment 170. Par contre, lorsque le tiroir de contact est déplacé en seconde position, l'organe de verrouillage 455 est placé en regard du segment 172. Ce dernier est plus éloigné du fond 108 que le premier segment 170.

Le second organe de verrouillage 455 prévu sur le tiroir 400 est délimité principalement par deux faces référencées 456, 457.

La face 456 s'étend parallèlement aux parois latérales 124 et 125 et est dirigée vers la paroi 125.

La face 457 s'étend parallèlement au fond 108. Elle est opposée à celui-ci et donc dirigée vers les segments 170, 172 de l'ouveture 121.

Ainsi, en position de repos du tiroir de contact 400, l'organe de verrouillage 455 est placé en regard du segment 170 et repose contre celui-ci par l'intermédiaire de sa face 457. Par contre, lorsque le tiroir de contact 400 est déplacé en seconde position, à l'encontre de la sollicitation élastique exercée par le ressort 402, l'organe de verrouillage 455 est placé en regard du second segment 172 et peut reposer contre celui-ci par l'intermédiaire de sa face 457. De ce fait, en seconde position du tiroir de contact 400, la face 456 est susceptible de venir en prise avec le décrochement 171 pour interdire le retour du tiroir de contact 400 en position de repos.

Le chariot 600 est guidé à coulissement entre deux positions, par le boîtier 100, dans une direction parallèle à la direction de déplacement B du tiroir de contact 400.

Le chariot 600 est sollicité vers une position ditede travail illustrée sur la figure 6 (soit vers la gauche de la figure 6) par un ressort 690.

Le ressort 690 est intercalé entre la face latérale 124 du boîtier et le chariot 600. Ainsi, au repos, le chariot 600 repose contre la face latérale 125 du boîtier.

Le chariot 600 porte une lamelle 630 en matériau ferromagnétique adaptée pour coopérer avec une bobine 700 supportée fixe par le boîtier 100.

Le chariot 600 possède un doigt 640 sur lequel vient buter l'organe de verrouillage 455 lorsque le tiroir de contact 400 est déplacé vers sa seconde position. Le doigt 640 s'étend pour l'essentiel parallèlement à la direction de translation A du coulisseau, entre l'organe de verrouillage 455 et la bobine 700, soit perpendiculairement au fond 108.

Le chariot 600 possède par ailleurs un organe de déverrouillage 650 apte à coopérer avec l'organe de verrouillage 455 solidaire du tiroir de contact 400.

Pour l'essentiel, l'organe de déverrouillage 650 ménagé sur le chariot 600 est délimité par deux surfaces 651, 652.

La surface 651 s'étend parallèlement aux parois latérales 124, 125 du boîtier et coïncide sensiblement avec le décrochement 171 lorsque le chariot 600 est placé en position de travail.

La surface 652 s'étend parallèlement au fond 108. Elle est dirigée vers celui-ci et est sensiblement coplanaire du segment 170 de l'organe de verrouillage 121. Ainsi, la surface 652 prolonge le segment 170 lorsque le chariot 600 est placé en position de travail. De préférence, l'arête 653 définie entre les surfaces 651 et 652 est arrondie, comme illustré sur les figures annexées. Cette arête 653 coopère avec une rampe 458 ménagée sur le tiroir de contact 400, et plus précisément sur l'organe de verrouillage 455.

La rampe 458 relie la face 457 précitée de l'organe de verrouillage 455 et une face latérale 459 de cet organe, orientée parallèlement aux parois latérales 124, 125 du boîtier et dirigée vers la face latérale 124. La rampe 458 est plane et inclinée sur la direction de translation B du tiroir de contact 400. La rampe 458 converge vers le fond 108 du boîtier en éloignement de la face 457.

La projection de la rampe 458 sur un plan perpendiculaire à la direction de translation B du tiroir est au moins égale à la longueur du décrochement 171.

La bobine 700 est placée sur un noyau en matériau ferromagnétique 702 s'étendant parallèlement à la direction de translation B, en regard du chariot 600.

De préférence, la lamelle 630 est susceptible de débattement sur le chariot 600 de telle sorte que la lamelle 630 puisse être plaquée étroitement contre la face transversale 704 du noyau 702 afin de réduire de façon optimale l'entrefer entre le noyau 702 et la lamelle 630.

De façon avantageuse, la lamelle 630 possède une section droite en U composée de deux ailes parallèles 633, 634 reliées par une âme 635. Cette dernière s'étend parallèlement au fond 108, en position adjacente à celui-ci. Les deux ailes 633, 634 s'étendent parallèlement aux parois latérales 124, 125 du boîtier. Elles sont disposées de part et d'autre du doigt 640. De plus, un ressort 632 est intercalé entre le doigt 640 et l'aile 634 adjacente à la bobine 700.

On a déjà décrit dans la demande de certificat d'addition 86 07963 déposée le 3 juin 1986 des moyens permettant de supporter la palette 630 à débattement sur un chariot 600. Pour cette raison, ces moyens ne seront pas décrits plus en détail par la suite.

On va maintenant décrire le fonctionnement du commutateur conforme à la présente invention en regard des figures 6 à 9.

Sur la figure 6, le commutateur est représenté en position de repos.

Le coulisseau de commande 200 est sollicité en éloignement du tiroir de contact 400 par les ressorts 210, 212. L'extrémité 312 de la palette 300 est éloignée du tiroir de contact 400. Elle est placée en regard de la rampe 460. Le tiroir de contact 400 est poussé par le ressort 402 en position de repos. Le plot de contact 450 court-circuite deux lamelles de contact portées par le boîtier permettant avantageusement de fermer le circuit d'alimentation de l'éclairage code du véhicule automobile.

Le ressort 424 associé au plot de contact 450 pousse la surface 457 de l'organe de verrouillage 455 porté par le tiroir de contact 400, contre le premier segment 170 de l'ouverture 121 ménagée dans le voile 120.

Par ailleurs, le chariot 600 est sollicité en appui, en position de travail, contre la paroi latérale 125 du boîtier par le ressort 690. La surface 652 prolonge le segment 170 et la structure de déverrouillage 650 recouvre le décrochement 171 et le second segment 172. La lamelle 630 est éloignée du noyau 702 de la bobine.

On a représenté sur la figure 7 une position intermédiaire du tiroir de contact 400 et du chariot 600 obtenue après déplacement du coulisseau de commande 200 pour assurer la commutation de l'éclairage code vers l'éclairage phare. Le déplacement du tiroir du contact 400 dans la direction de translation B, à la suite du déplacement du coulisseau de commande 200 dans la direction A est induit par la palette 300 qui glisse sur la rampe 460 selon les modalités décrites dans la demande de brevet 86 05604. Ces modalités définissant un fonctionnement bistable du commutateur ne seront donc pas décrites plus en détail par la suite.

On notera qu'au cours du déplacement du tiroir 400 à translation dans la direction B, de la position de repos illustrée sur la figure 6 à la position intermédiaire illustrée sur la figure 7, la face 457 de l'organe de verrouillage 455 glisse contre le segment 170 de l'ouverture 121 puis contre la face 652 de la structure de déverrouillage 650, jusqu'à ce que la face 459 vienne reposer contre le doigt de commande 640 solidaire du chariot 600 pour déplacer ce dernier en position intermédiaire, à l'encontre de la sollicitation du ressort 690. Ainsi, la surface de verrouillage 456 ne peut initialement venir en prise avec le décrochement 171.

Dans la position intermédiaire du tiroir de contact 400 illustrée sur la figure 7, le plot de contact 450 court-circuite une autre paire de lamelles de contact électrique. La liaison électrique entre cette paire de lamelles permet de fermer le circuit d'alimentation de l'éclairage phare du véhicule automobile.

Par ailleurs, lorsque le chariot 600 atteint la position intermédiaire illustrée sur la figure 7, la lamelle 630 solidaire du chariot 600 vient reposer, par l'intermédiaire de son aile 634, contre le noyau 702 associé à la bobine 700.

Si la bobine électrique 700 n'est pas alimentée alors que le tiroir de contact 400 et le chariot 600 atteignent la position intermédiaire illustrée sur la figure 7, lorsque le levier commandant le déplacement du coulisseau 200 est relâché, le tiroir de contact 400 est repoussé dans la position de repos illustré sur la figure 6 par le ressort 402. Simultanément le chariot 600 est repoussé dans la position de repos illustré sur la figure 6 par le ressort 690. Là encore, la surface de verrouillage 456 ne peut par conséquent venir en prise avec le décrochement 171.

En d'autres termes, si la bobine 700 n'est pas alimentée lorsque le chariot 400 a atteint la position intermédiaire illustrée sur la figure 7, et que le levier de commande du commutateur est relâché, le tiroir de contact 400 et le chariot 600 sont ramenés respectivement en position de repos et de travail par leur ressort respectif et la position d'éclairage phare correspond à une position instable.

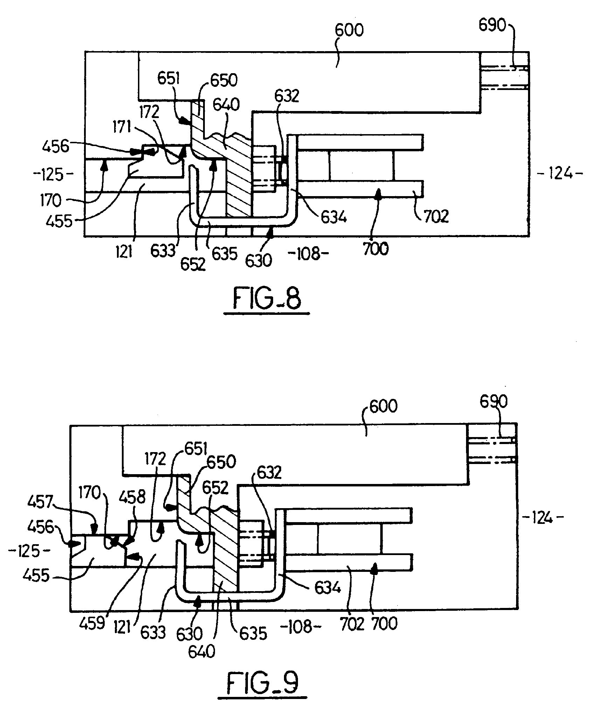

Par contre, si la bobine 700 est alimentée lorsque le chariot 600 atteint la position intermédiaire illustrée sur la figure 7, la lamelle 630 est maintenue accolée contre le noyau 702 lorsque le levier de commande est relâché, malgré la sollicitation du ressort 690. Le doigt 640 vient alors reposer contre l'aile 633 de la lamelle 630. Le chariot 600 ne peut revenir en position de travail en appui contre la face latérale 125 sous l'effet de la sollicitation du ressort 690. Le chariot 600 est alors maintenu en position dite inactive, telle qu'illustrée sur la figure 8, dans laquelle le segment 172 de l'ouverture 121 est au moins largement découvert. Dans ces conditions, la surface 457 de l'organe de verrouillage 455 vient reposer contre le segment 172 de l'ouverture 121 et la surface de verrouillage 456 vient reposer contre le décrochement 171. On rappellera en effet que le ressort 424 associé au plot 450 exerce sur le tiroir 400 un couple de pivotement qui sollicite l'organe de verrouillage 455 contre le segment 172 de l'ouverture 121. De plus, la prolongation de la génératrice passant par l'axe de pivotement 302 et le centre du point de contact de l'extrémité 312 de la palette 300 sur la rampe 460 passe d'un côté de l'axe du galet 414 opposé à l'organe de verrouillage 455. Ainsi la palette 300 exerce également sur le tiroir de contact 400 un couple de pivotement agissant dans le même sens que le ressort 424.

Le tiroir de contact 400 est ainsi verrouillé en seconde position tel qu'illustré sur la figure 8. Dans cette seconde position le plot de contact 450 relie la même paire de lamelles de contacts électriques qu'en position intermédiaire illustrée sur la figure 7. En d'autres termes, lorsque la bobine 700 est alimentée la position d'éclairage phare correspond à une position stable.

Le retour du tiroir de contact 400 en position de repos, tel qu'illustré sur la figure 6, peut être obtenu à distance par ouverture du commutateur associé à la bobine 700. En effet, dès que la bobine 700 cesse d'être alimentée la lamelle 630 et le chariot 600 ne sont plus maintenus en position inactive telle qu'illustrée sur la figure 8, et le ressort 690 repousse ceux-ci en position de travail, contre la paroi latérale 125, tel qu'illustré sur la figure 6. Au cours de ce déplacement, l'arête 653 vient prendre appui contre la rampe 458 et exerce sur celle-ci un force dirigée vers le fond 108 du boîtier pour assurer un déplacement de l'organe de verrouillage 455 en rapprochement du fond 108 tel que la surface 456 échappe au décrochement 171 pour permettre au ressort 402 de repousser le tiroir de contact 400 en position de repos.

Dans cette hypothèse le commutateur est ramené en position d'origine tel qu'illustré sur la figure 6.

On peut également obtenir un retour du tiroir de contact 400 dans la position de repos à l'aide d'une nouvelle translation du coulisseau de commande 200 en rapprochement du tiroir de contact 400. En effet, lorsque l'extrémité 312 de la palette 300 vient en contact avec la rampe 470, la palette 300 exerce sur le tiroir de contact 400 un couple de pivotement opposé à celui exercé par le ressort 424. Le couple de pivotement exercé par la palette 300 repousse l'organe de verrouillage 455 en éloignement du segment 172 de l'ouverture 121, soit en rapprochement du fond 108 du boîtier, de telle sorte que la surface de verrouillage 456 échappe au décrochement 171. Là encore, le ressort 402, en liaison avec la palette 300, repousse brusquement le tiroir de contact 400 dans la position de repos telle qu'illustrée sur la figure 9.

Lorsque le tiroir de contact 400 est ainsi ramené en position de repos le circuit d'alimentation de l'éclairage code du véhicule automobile est à nouveau fermé par l'intermédiaire du plot de contact 450.

En conclusion le maintien du tiroir de contact 400 dans la seconde position tel qu'illustré sur la figure 8, correspondant à l'alimentation des phares du véhicule automobile, ne peut être obtenu que lorsque le chariot 600 est maintenu contre le noyau 702 de la bobine 700, c'est-à-dire lorsque la bobine 700 est alimentée.

Dès lors que la bobine 700 n'est plus alimentée, la position intermédiaire du chariot 600, illustrée sur la figure 7, correspond à une position instable.

De ce fait, lorsque la bobine 700 n'est pas alimentée, le tiroir de contact 400 est ramené en permanence dans la position de repos illustrée sur la figure 5 par le ressort 402.

Par contre, lorsque la bobine 700 est alimentée, les déplacements successifs du coulisseau de commande 200 en rapprochement du tiroir de contact 400, assurent une commutation de ce dernier entre les deux positions représentées sur les figures 6 et 8 pour assurer une commutation séquentielle des feux du véhicule automobile entre la position code et la position phare.

On notera que lors du déplacement du chariot 600 de la position de travail illustrée sur la figure 6 à la position intermédiaire illustrée sur la figure 7, on obtient un déplacement relatif entre le chariot 600 et la lamelle 630, avec compression du ressort 632, afin de garantir un contact étroit entre l'aile 634 de la lamelle 630 et le noyau 702.

Par ailleurs, l'amplitude du déplacement du chariot 600 entre la position de travail illustrée sur la figure 6 et la position inactive illustrée sur la figure 8 doit être au moins égale à la distance séparant les surfaces 456 et 459 de l'organe de verrouillage 455, pour permettre à ce dernier de venir reposer contre le segment 172.

Une variante possible consisted dans le fait que la rampe 458 ménagée sur l'organe de verrouillage 455 selon le mode de réalisation illustré sur les figures annexées, afin de déplacer l'organe de verrouillage 455 en éloignement du segment 172, lorsque le chariot 600 est déplacé de la position inactive illustrée sur la figure 8 à la position de travail illustrée sur la figure 6, pourrait être ménagée sur le chariot 600 lui-même.

**Revendications**

1. Commutateur électrique bistable comprenant un boîtier (100) qui loge un tiroir de contact (400) susceptible de déplacement entre deux positions, des moyens élastiques (402) qui sollicitent le tiroir (400) vers une première position, deux organes de verrouillage (455, 121) prévus respectivement sur le tiroir de contact (400) et sur le boîtier (100), qui sont susceptibles de venir en prise pour verrouiller le tiroir de contact en seconde position, caractérisé par le fait qu'il comprend en outre un chariot (600) déplaçable par le tiroir (400) parallèlement au déplacement de celui-ci, entre une position de travail, dans laquelle le chariot (600) interfère avec les organes de verrouillage (455, 121) afin d'empêcher que ceux-ci ne viennent en prise et donc empêcher que le tiroir de contact (400) ne puisse être verrouillé en seconde position, et une position inactive dans laquelle le chariot (600) n'interfère pas avec les organes de verrouillage (455, 121) pour autoriser la venue en prise de deux-ci, et une bobine électrique (700) alimentée sélectivement par un commutateur associé pour immobiliser sélectivement le chariot (600) dans l'une des deux positions précitées lorsqu'elle est alimentée.

2. Commutateur bistable selon la revendication 1, caractérisé par le fait que le boîtier (100) loge en outre un coulisseau de commande (200) guidé à translation (A) entre une position de repos et une position de travail, une palette 300 s'étendant dans la direction de déplacement du coulisseau, portée à pivotement sur le coulisseau de commande autour d'un axe (302) transversal à la direction de translation du coulisseau, le tiroir de contact (400) étant susceptible de déplacement dans une direction générale (B) perpendiculaire à la direction (A) de déplacement du coulisseau et à l'axe de pivotement (302) de la palette (300), et étant muni d'au moins un plot de contact (450) et de deux rampes (460, 470) ménagées sur une face commune du tiroir en regard de la palette (300) telles que lesdites rampes (460, 470) soient placées alternativement en regard de la palette (300) selon la position du tiroir dans le boîtier.

3. Commutateur selon l'une des revendications 1 ou 2, caractérisé par le fait qu'il comprend en outre une rampe (458) contrôlant un déplacement relatif du tiroir de contact (400) et du boîtier (100) perpendiculairement à la direction de déplacement du tiroir de contact (400) lorsque le chariot (600) est déplacé de sa position inactive vers sa position de travail.

4. Commutateur selon la revendication 3, caractérisé par le fait que la rampe (458) est ménagée sur le tiroir de contact (400).

5. Commutateur selon l'une des revendications 1 à 4, caractérisée par le fait que la bobine (700) est adaptée pour immobiliser le chariot (600) dans sa position inactive lorsqu'elle est alimentée.

6. Commutateur électrique selon l'une des revendications 1 à 5, caractérisé par le fait que le premier organe de verrouillage (121) prévu sur le boîtier (100) et le second organe de verrouillage (455) prévu sur le tiroir de contact (400) comprennent des surfaces de verrouillage orthogonales à la direction de translation (B) du tiroir (400)

7. Commutateur électrique selon l'une des revendications 1 à 6, caractérisé par le fait que le premier organe de verrouillage (121) prévu sur le boîtier (100) est formé d'une ouverture (121) ménagée dans un voile (120) du boîtier et recevant un téton (455) solidaire du tiroir de contact (400) qui constitue le second organe de verrouillage.

8. Commutateur électrique selon l'une des revendications 1 à 7, caractérisé par le fait que le chariot (600) comprend un doigt de commande (640) servant de butée au tiroir porte contact (400) lorsque celui-ci est déplacé de sa position de repos vers la seconde position.

9. Commutateur électrique selon l'une des revendications 1 à 8, caractérisé par le fait que le chariot (600) possède une lamelle (630) en matériau ferromagnétique apte à coopérer avec la bobine (700) pour maintenir le chariot (600) en position inactive lorsque la bobine (700) est alimentée.

10. Commutateur électrique selon la revendication 9, caractérisé par le fait que la lamelle (630) est supportée avec jeu par le chariot (600) pour se plaquer étroitement contre un noyau (702) introduit dans la bobine (700).

11. Commutateur électrique selon l'une des revendications 1 à 10, caractérisé par le fait que le chariot (600) est sollicité vers sa position de travail par des moyens élastiques (690).

12. Commutateur électrique selon l'une des revendications 1 à 11, caractérisé par le fait que le chariot (600) possède une structure de déverrouillage (650) apte à recouvrir l'organe de verrouillage (121) prévu sur le boîtier (100) lorsque le chariot (600) est placé en position de travail.

13. Commutateur électrique selon la revendication 12, caractérisé par le fait que le premier organe de verrouillage (121) prévu sur le boîtier (100) est formé d'une ouverture ménagée dans un voile (120) de boîtier et présentant deux segments (170, 172) orientés parallèlement à la direction de translation (B) du tiroir (400) reliés par un décrochement (171) orienté transversalement à la direction de translation (B) du tiroir (400) et par le fait que la structure de déverrouillage (650) prévue sur le chariot est délimitée par une surface (652) coplanaire de l'un des segments (170).

14. Commutateur électrique selon l'une des revendications 1 à 13, caractérisé par le fait qu'il comprend un boîtier (100) qui loge :
   – un tiroir de contact (400) susceptible de déplacement à translation entre deux positions,
   – des moyens élastiques (402) qui sollicitent le tiroir (400) vers une première position,
   – un premier organe de verrouillage (121) prévu sur le boîtier (100) et présentant deux segments (170, 172) orientés parallèlement à la direction de translation (B) du tiroir (400) reliés par un décrochement (171) orienté transversalement à la direction de translation (B) du tiroir,
   – un second organe de verrouillage (455) solidaire du tiroir de contact (400), présentant une surface de verrouillage (456) orthogonale à la direction de translation du tiroir (400) et apte à venir en prise avec le décrochement (171) du premier organe de verrouillage (121) pour verrouiller le tiroir de contact (400) en seconde position,

– un chariot (600) déplaçable par le tiroir (400) parallèlement au déplacement de celui-ci entre une position de travail et une position inactive,

– des moyens élastiques (690) qui sollicitent le chariot (600) vers sa position de travail,

– une structure de déverrouillage (650) solidaire du chariot et présentant une surface (652) coplanaire de l'un des segments (170) du premier organe de verrouillage (121), afin d'empêcher que la surface de verrouillage (456) du second organe (455) ne vienne en prise avec le décrochement (171) du premier organe (121) lorsque le chariot est placé en position de travail, et

– une bobine électrique (700) alimentée sélectivement par un commutateur associé pour immobiliser sélectivement le chariot (600) dans sa position inactive lorsqu'elle est alimentée.

**Patentansprüche**

1. Bistabiler elektrischer Schalter, welcher aufweist: ein Gehäuse (100), welches einen zwischen zwei Positionen verstellbaren Kontaktschieber (400) lagert, elastische Mittel (402), welche den Schieber (400) gegen eine erste Position vorspannen, und zwei auf dem Kontaktschieber (400) bzw. auf dem Gehäuse (100) vorgesehene Verriegelungsorgane (455, 121), welche in Eingriff zu gelangen vermögen, um den Kontaktschieber in der zweiten Position zu verriegeln, dadurch gekennzeichnet, daß er zusätzlich aufweist: einen Schlitten (600), welcher durch den Schieber (400) parallel zu dessen Bewegung verstellbar ist, und zwar zwischen einer Arbeitsposition, in welcher der Schlitten (600) sich mit den Verriegelungsorganen (455, 121) überlagert, um zu verhindern, daß diese in Eingriff gelangen, und um damit zu verhindern, daß der Kontaktschieber (400) in der zweiten Position verriegelt werden kann, und einer inaktiven Position, in der der Schlitten (600) sich nicht mit den Verriegelungsorganen (455, 121) überlagert, um deren Ineinandergreifen zu ermöglichen, und eine elektrische Spule (700), welche wahlweise durch einen zugehörigen Schalter gespeist wird, um bei Erregung wahlweise den Schlitten (600) in einer der beiden genannten Positionen festzuhalten.

2. Bistabiler Schalter nach Anspruch 1, dadurch gekennzeichnet, daß das Gehäuse (100) außerdem aufweist: einen translatorisch (A) zwischen einer Ruheposition und einer Arbeitsposition verstellbar geführten Steuerschieber (200), einen Anker (300), welcher sich in der Verstellrichtung des Steuerschiebers erstreckt und auf dem Steuerschieber um eine zu der Verstellrichtung des Steuerschiebers quer verlaufende Achse (302) schwenkbar gelagert ist, wobei der Kontaktschieber (400) in einer zu der Verstellrichtung (A) des Steuerschiebers und zu der Schwenkachse (302) des Ankers (300) senkrechten allgemeinen Richtung (B) verstellbar ist und weiterhin mit mindestens einem Kontaktstück (450) sowie mit zwei Rampen (460, 470) versehen ist, welch letztere auf einer gemeinsamen, dem Anker (300) gegenüberstehenden Oberfläche derart ausgespart sind, daß diese Rampen (460, 470) je nach der Position des Kontaktschiebers in dem Gehäuse wahlweise dem Anker (300) gegenüberstehen.

3. Schalter nach Anspruch 1 oder 2, dadurch gekennzeichnet, daß er außerdem eine Rampe (458) aufweist, welche eine Relativbewegung zwischen dem Kontaktschieber (400) und dem Gehäuse (100) senkrecht zu der Verstellrichtung des Kontaktschiebers (400) steuert, wenn der Schlitten (600) aus seiner inaktiven Position in Richtung auf seine Arbeitsposition verstellt wird.

4. Schalter nach Anspruch 3, dadurch gekennzeichnet, daß die Rampe (458) auf dem Kontaktschieber (400) ausgespart ist.

5. Schalter nach einem der Ansprüche 1 bis 4, dadurch gekennzeichnet, daß die Spule (700) bei Erregung den Schlitten (600) in seiner inaktiven Position festzuhalten vermag.

6. Elektrischer Schalter nach einem der Ansprüche 1 bis 5, dadurch gekennzeichnet, daß das auf dem Gehäuse (100) vorgesehene erste Verriegelungsorgan (121) und das auf dem Kontaktschieber (400) vorgesehene zweite Verriegelungsorgan (455) Verriegelungsoberflächen aufweisen, welche zur Translationsrichtung (B) des Kontaktschiebers (400) senkrecht stehen.

7. Elektrischer Schalter nach einem der Ansprüche 1 bis 6, dadurch gekennzeichnet, daß das auf dem Gehäuse (100) vorgesehene erste Verriegelungsorgan (121) durch eine in einer Gehäusewand (120) ausgesparte Öffnung (121) gebildet ist und einen mit dem Kontaktschieber (400) fest verbundenen Vorsprung (455) aufnimmt, welcher das zweite Verriegelungsorgan bildet.

8. Elektrischer Schalter nach einem der Ansprüche 1 bis 7, dadurch gekennzeichnet, daß der Schlitten (600) einen Steuerzapfen (640) aufweist, welcher als Anschlag für den Kontaktschieber (400) dient, wenn dieser von seiner Ruheposition in Richtung auf die zweite Position verstellt wird.

9. Elektrischer Schalter nach einem der Ansprüche 1 bis 8, dadurch gekennzeichnet, daß der Schlitten (600) eine Lamelle (630) aus ferromagnetischem Material besitzt, welche mit der Spule (700) zusammenzuwirken vermag, um den Schlitten (600) in der inaktiven Position zu halten, wenn die Spule (700) erregt wird.

10. Elektrischer Schalter nach Anspruch 9, dadurch gekennzeichnet, daß die Lamelle (630) mit Spiel durch den Schlitten (600) gehalten ist, damit sie sich eng an einen in die Spule (700) eingeführten Kern (702) anlegen kann.

11. Elektrischer Schalter nach einem der Ansprüche 1 bis 10, dadurch gekennzeichnet, daß der Schlitten (600) durch elastische Mittel (690) gegen seine Arbeitsposition vorgespannt ist.

12. Elektrischer Schalter nach einem der Ansprüche 1 bis 11, dadurch gekennzeichnet, daß der Schlitten (600) eine Entriegelungsstruktur (650) besitzt, welche das auf dem Gehäuse (100) vorgesehene Verriegelungsorgan (121) abzudecken vermag, wenn der Schlitten (600) in seiner Arbeitsposition steht.

13. Elektrischer Schalter nach Anspruch 12, dadurch gekennzeichnet, daß das auf dem Gehäuse (100) vorgesehene erste Verriegelungsorgan (121) durch eine in einer Gehäusewand (120) ausgesparte Öffnung gebildet ist und zwei Segmente (170, 172) aufweist, welche parallel zur Translationsrichtung (B) des Kontaktschiebers (400) ausgerichtet und durch einen quer zur Translationsrichtung (B) des Kontaktschiebers (400) gerichteten besatz (171) verbunden sind, und daß die auf dem Schlitten vorgesehene Entriegelungsstruktur (650) durch eine Oberfläche (652) begrenzt ist, welche mit einem der Segmente (170) in gleicher Ebene liegt.

14. Elektrischer Schalter nach einem der Ansprüche 1 bis 13, dadurch gekennzeichnet, daß er ein Gehäuse (100) aufweist, welches enthält:
– einen Kontaktschieber (400), welcher translatorisch zwischen zwei Positionen verschiebbar ist,
– elastische Mittel (402), welche den Kontaktschieber (400) gegen eine erste Position vorspannen,
– ein erstes Verriegelungsorgan (121), welches auf dem Gehäuse (100) vorgesehen ist und zwei Segmente (170, 172) aufweist, die parallel zur Translationsrichtung (B) des Kontaktschiebers (400) ausgerichtet und durch einen quer zur Translationsrichtung (B) des Kontaktschiebers gerichteten Absatz (171) verbunden sind,
– ein zweites, mit dem Kontaktschieber (400) fest verbundenes Verriegelungsorgan (455), welches eine zur Translationsrichtung des Kontaktschiebers (400) senkrechte Verriegelungsoberfläche (456) aufweist, die mit dem Absatz (171) des ersten Verriegelungsorgans (121) in Eingriff zu gelangen vermag, um den Kontaktschieber (400) in der zweiten Position zu verriegeln,
– einen Schlitten (600), welcher durch den Kontaktschieber (400) parallel zu dessen Bewegung zwischen einer Arbeitsposition und einer inaktiven Position verstellbar ist,
– elastische Mittel (690), welche den Schlitten (600) in Richtung auf seine Arbeitsposition vorspannen,
– eine Entriegelungsstruktur (650), welche mit dem Schlitten fest verbunden ist und eine Oberfläche (652) aufweist, welche mit einem der Segmente (170) des ersten Verriegelungsorgans (121) koplanar ist, um zu verhindern, daß die Verriegelungsoberfläche (456) des zweiten Verriegelungsorgans (455) in Eingriff mit dem Absatz (171) des ersten Verriegelungsorgans (121) gelangt, wenn der Schlitten in seiner Arbeitsposition steht, und
– eine elektrische Spule (700), welche wahlweise durch einen zugehörigen Schalter gespeist wird, um wahlweise bei Erregung den Schlitten (600) in seiner inaktiven Position festzuhalten.

## Claims

1. A bistable electric switch comprising a housing (100) which houses a contact slide (400) which can move between two positions, elastic means (402) which push the slide (400) towards a first position, two locking members (455, 121) provided on the contact slide (400) and the housing (100) respectively which are capable of engaging to lock the contact slide in a second position, characterised in that it also comprises a carriage (600) which can be moved by the slide (400) parallel to the movement of the latter between a working position in which the carriage (600) interferes with the locking members (455, 121) to prevent these from engaging and therefore prevents the contact slide (400) from being locked in the second position, and a non-working position in which the carriage (600) does not interfere with the locking members (455, 121) in order to allow the latter to engage, and an electrical coil (700) supplied selectively by an associated switch to selectively immobilise the carriage (600) in one of the aforesaid two positions when power is fed to the coil.

2. A bistable switch according to claim 1, characterised in that the housing (100) also houses a control slide (200) which is guided so as to move laterally (A) between a resting position and a working position, an arm (300) which extends in the direction of movement of the slide which is pivotally mounted on the control slide about an axis (302) transverse to the direction of movement of the slide, the contact slide (400) being capable of moving in a general direction (B) perpendicular to direction (A) in which the slide moves and to the pivot axis (302) of the arm (300), and provided with at least one contact pad (450) and two ramps (460, 470) provided on one side of the slide opposite the arm (300) in such a way that the said ramps (460, 470) are located alternately opposite the arm (300) depending on the position of the slide in the housing.

3. A switch according to one of claims 1 or 2, characterised in that it also comprises a ramp (458) controlling the relative movement of the contact slide (400) and the housing (100) perpendicular to the direction of movement of the contact slide (400) when the carriage (600) is moved form its non-working position to its working position.

4. A switch according to claim 3, characterised in that the ramp (458) is constructed on the contact slide (400).

5. A switch according to one of claims 1 to 4 characterised in that the coil (700) is constructed to immobilise the carriage (600) in its non-working position when power is fed to the coil.

6. An electrical switch according to any of claims 1 to 5, characterised in that the first locking member (121) provided on the housing (100) and the second locking member (455) provided on the contact slide (400) comprise locking surfaces at right angles to the direction of movement (B) of the slide (400).

7. An electrical switch according to any one of claims 1 to 6, characterised in that the first locking member (121) provided on the housing (100) is formed of an opening (121) made in a surface (120) of the housing which is engaged by a projection (455) which is integral with the contact slide (400) and constitutes the second locking member.

8. An electrical switch according to any one of claims 1 to 7, characterised in that the carriage (600) includes a control bar (640) acting as a stop for the contact-bearing slide (400) when the latter is moved from its resting position to the second position.

9. An electrical switch according to any one of claims 1 to 8, characterised in that the carriage (600) has a blade (630) of ferromagnetic material which is able to act in concert with the coil (700) to hold the carriage (600) in its non-working position when power is fed to the coil (700).

10. An electrical switch according to claim 9, characterised in that the blade (630) is supported with freedom of play by the carriage (600) in order to lie closely against a core (702) placed in the coil (700).

11. An electrical switch according to any one of claims 1 to 10, characterised in that the carriage (600) is pushed towards its working position by elastic means (690).

12. An electrical switch according to any one of claims 1 to 11, characterised in that the carriage (600) has un unlocking structure (650) capable of covering the locking member (121) provided in the housing (100) when the carriage (600) is place in its working position.

13. An electrical switch according to claim 12, characterised in that the first locking member (121) provided on the housing (100) is formed by an opening made in a surface (120) of the housing and having two segments (170, 172) orientated parallel to the direction of movement (B) of the slide (400) connected together by means of an uncoupler (171) orientated transversely to the direction of movement (B) of the slide (400) and in that the unlocking structure (650) provided on the carriage is bounded by a surface (652) which is coplanar with one of the segments (170).

14. An electrical switch according to any one of claims 1 to 13, characterised in that it comprises a housing (100) which houses:
– a contact slide (400) capable of moving laterally between two positions,
– elastic means (402) which push the slide (400) towards a first position,
– a first locking member (121) provided on the housing (100) having two segments (170, 172) which are orientated parallel to the direction of movement (B) of the slide (400) connected by an uncoupler (171) orientated transversely to the direction of movement (B) of the slide,
– a second locking member (455) integral with the contact slide (400) having a locking surface (456) which is at right angles to the direction of movement of the slide (400) and able to engage the uncoupler (171) of the first locking member (121) to lock the contact slide (400) in a second position,
– a carriage (600) which can be moved by the slide (400) parallel to the movement of the latter between a working position and a non-working position,
– elastic means (690) which push the carriage (600) towards its working position,
– an unlocking structure (650) which is integral with the carriage and has a surface (652) which is coplanar with one of the segments (170) of the first locking member (121) to prevent the locking surface (456) of the second member (455) from engaging the uncoupler (171) of the first member (121) when the carriage is in its working position, and
– an electrical coil (700) which is supplied selectively by an associated switch to selectively immobilise the carriage (600) in its non-working position when power is supplied to the coil.

## FIG-1

— État de la technique. —

FIG_2

FIG_2bis

FIG_3

FIG_4

FIG_5

FIG-6

FIG-7

14

FIG. 8

FIG. 9